# EUROPÄISCHE PATENTSCHRIFT

(11) **EP 2 261 149 B1**
(45) Veröffentlichungstag und Bekanntmachung des Hinweises auf die Patenterteilung: **06.11.2013**
(21) Anmeldenummer: 10004740.6
(22) Anmeldetag: 05.05.2010
(51) Int. Cl.: B65G 57/06, B65G 61/00

(54) **Vorrichtung und Verfahren zur Handhabung von Artikel- und/oder Gebindelagen**
Device and method for handling layers of articles
Dispositif et procédé de manipulation de couches d'articles

(30) Priorität: 09.06.2009 DE 102009025942
(43) Veröffentlichungstag der Anmeldung: 15.12.2010
(73) Patentinhaber: Krones AG, 93073 Neutraubling (DE)
(72) Erfinder: Kirschner, Peter, 83139 Söchtenau (DE); Wegener, Kai Dipl.-Ing., 81369 München (DE)
(74) Vertreter: Benninger, Johannes

(56) Entgegenhaltungen:
- WO-A1-2007/062778
- DE-A1- 2 808 129

## Beschreibung

Die vorliegende Erfindung betrifft eine Vorrichtung sowie ein Verfahren zur Handhabung von Artikellagen und/oder Gebindelagen, insbesondere zur Palettierung und Depalettierung von Artikel- und/oder Gebindelagen aus Artikeln.

Zur Handhabung von Artikeln und Gebinden, die sich in vorbereiteten Lagen befinden, werden oftmals geeignete Greifereinrichtungen wie Greiferköpfe verwendet. Diese häufig als sog. Jalousiegreiferköpfe ausgebildeten Handhabungseinrichtungen eignen sich insbesondere zum Palettieren und Depalettieren von ganzen Artikel- und Gebindelagen, bspw. zum Stapeln der einzelnen Lagen auf größere Palettenstapel oder zum Entnehmen der Lagen von diesen Palettenstapeln.

Eine bekannte Bauart solcher Jalousiegreiferköpfe sieht einen Rahmen zur Aufnahme der Gebindelagen vor, der bspw. mit einem schwenk- und drehbeweglichen Roboterarm bewegt werden kann. Die Auflageflächen für die einzelnen Gebindelage sind beweglich und werden durch eine Vielzahl von drehbaren Rollen oder Stäben gebildet, die in seitlichen Führungsschienen gehalten sind, so dass die Jalousieböden durch Verschieben in den Führungsschienen geöffnet und geschlossen werden können. Diese Jalousieböden können sowohl zweiteilig zum gegensinnigen Öffnen und Schließen als auch einseitig zum Öffnen und Schließen zu einer Seite des Rahmens ausgebildet sein.

Ein solcher Jalousiegreiferkopf mit einem einseitig verschiebbaren Jalousieboden ist bspw. aus der WO 2007/062778 A1 bekannt. Der verschiebbare Jalousieboden ist in einem Rahmen zur Aufnahme von Artikellagen angeordnet, der wiederum an einem beweglichen Roboterarm aufgehängt ist. Die Beladung und Entladung sieht eine synchrone und gegensinnige horizontale Bewegung des Roboterarms mit dem daran aufgehängten Rahmen und des Jalousiebodens vor, so dass die Artikel selbst während des Aufnehmens oder Ablegens nahezu keine seitliche Relativbewegung erfahren, sondern im Wesentlichen nur leicht angehoben oder abgesenkt werden müssen, um der seitlichen Unterfahrbewegung des Jalousiebodens Rechnung tragen zu können.

Die EP 1 890 954 B1 beschreibt ein Verfahren und eine Vorrichtung zum Entpalettieren von gestapelten Gebinden mittels reibschlüssigem Anheben und Unterfahren der Gebinde durch einen Tragboden. Hierbei werden die Gebinde an zwei gegenüber liegenden Seiten angehoben, so dass die angehobenen Gebinde von zwei gegenüber liegenden Seiten aus von zwei Tragböden unterfahren werden können. Das reibschlüssige Anheben kann bspw. mittels gummierter, sich drehender Walzen erfolgen, die das anzuhebende Gebinde an zwei gegenüber liegenden Seiten reibschlüssig angreifen und in senkrechter Richtung anheben.

Bei diesem bekannten Verfahren und dieser Vorrichtung ist zwar eine zuverlässige Funktion zu erwarten, doch ist einerseits für das einwandfreie Anheben eine gewisse Andrückkraft der seitlich angreifenden Walzen an die Gebinde unumgänglich, da ansonsten kein Reibschluss erreicht werden kann, so dass sich das Verfahren nicht zur Handhabung druckempfindlicher Gebinde oder Artikel eignet. Zudem ist zu erwarten, dass die Walzen einem allmählichen Verschleiß an ihren Oberflächen unterliegen, der zu einer Reduzierung des Haftreibungskoeffizienten und damit zu einem reduzierten Reibschluss führt, was wiederum eine Erhöhung der Andruckkraft erforderlich macht, um diesen Verschleiß ausgleichen zu können.

Die DE 28 08 129 A1 offenbart eine Vorrichtung und ein Verfahren gemäß den Oberbegriffen der Anspruche 1 und 7 und beschreibt eine Vorrichtung zum Beladen von Paletten mit Säcken, bei dem die Säcke über Transportbänder zu den Paletten transportiert und mittels Schieberelemente auf die Paletten überschoben werden. Um das Überschieben zu erleichtern, ist den Auflageflächen für die einzelnen Sacklagen eine Vibrationseinrichtung zugeordnet, die bspw. durch Magnetvibratoren gebildet sein können.

Ein vorrangiges Ziel der Erfindung besteht darin, eine verbesserte und zuverlässiger arbeitende Handhabungsvorrichtung sowie ein entsprechendes Verfahren zur Handhabung von Artikel- und Gebindelagen zur Verfügung zu stellen, welche die genannten Nachteile des Standes der Technik vermeiden und alle Arten von Artikeln und Gebinden schonend und unter geringstem seitlichem Druck anheben und aufnehmen können.

Das obige Ziel der Erfindung wird mit einer Vorrichtung mit den Merkmalen des ersten Patentanspruchs erreicht.

Der Tragboden kann bei der erfindungsgemäßen Vorrichtung wahlweise durch eine starre, ein- oder mehrteilige Auflage gebildet sein, die vorzugsweise in horizontaler Richtung verschiebbar ist, um die Artikel- oder Gebindelagen darauf abzustellen, sobald der Tragboden in seiner Transportlage ist. Durch seitliches Verschieben eines einteiligen bzw. Öffnen eines zwei- oder mehrteiligen Tragbodens, bspw. gebildet durch zwei gegensinnig bewegbare Tragbodenhälften, können die zuvor augenommenen und/oder transportierten Lagen abgelegt werden, z.B. auf einer Palette oder auf einer bereits zuvor dort abgelegten Lage von Artikeln oder Gebinden. Wahlweise kann der Tragboden auch durch eine an sich bekannte Jalousie o. dgl. gebildet sein, die ebenfalls ein- oder mehrteilig ausgebildet sein kann. Derartige Jalousien sind typischerweise durch Ketten miteinander verbundener Stäbe gebildet, die durch Verschieben innerhalb einer seitlichen Führungsschiene innerhalb des Greiferkopfes geöffnet und geschlossen werden können.

Durch den in gezielte Vibration versetzten Tragboden können die aufzunehmenden Lagen besonders schonend angehoben und unterfahren werden, ohne dass eine seitliche Andrückbewegung oder ein seitliches Anheben erforderlich wäre. Die Vorrichtung kann insbesondere einen mindestens zweiteilig ausgebildeten Tragboden mit zwei gegensinnig zueinander beweglichen Tragbodenhälften aufweisen, die innerhalb einer gemeinsamen Ebene verschiebbar sind. Eine solche Anordnung ermöglicht das schonende und sehr schnelle Anheben und Ablegen der zu palettierenden oder depalettierenden Artikel- oder Gebindelagen. Die gegensinnig in horizontaler oder ggf. leicht geneigter Ebene verschiebbaren Tragbodenhälften werden zumindest während ihrer Schließbewegung, ggf. zusätzlich auch während ihrer Öffnungsbewegung in mittelfrequente Vibrationen versetzt, um das Aufnehmen und das Rutschen der aufzunehmenden oder abzulegenden Lagen von Artikeln oder Gebinden gezielt zu unterstützen. Dabei ist vorzugsweise jeder der wenigstens zwei Tragbodenhälften eine Vibrationseinrichtung zugeordnet, die zumindest während der Verschiebebewegung der Tragbodenhälften deren zueinander weisende Vorderkanten in Vibrationen versetzt. Hierbei kann vorgesehen sein, dass zumindest die Vorderkanten der Tragbodenhälften eine kreisende und/oder oszillierende Schwingbewegung ausführen. Da die Tragbodenhälften jeweils starr sind, schwingen mit den Vorderkanten normalerweise auch die übrigen Bereiche, wenn auch die Auslenkungen je nach Art der Schwingungsbewegungen für die verschiedenen Abschnitte der Tragböden jeweils unterschiedlich sein können. Allerdings kann eine vorteilhafte Ausführungsvariante auch darin bestehen, dass nur die vorderen Kanten der Tragbodenhälften in Schwingungen versetzt werden, während die übrigen Auflagenbereiche von diesen Schwingungen entkoppelt sein können, was bspw. durch eine entsprechende mechanische Entkoppelung der Bereiche gewährleistet werden kann. Die den vorderen Kanten der Tragbodenhälften zugeordneten Vibrationseinrichtungen sind bei dieser Ausführungsvariante vorzugsweise an diesen Vorderkanten lokalisiert, so dass keine zusätzlichen Einrichtungen zur Schwingungsübertragung erforderlich sind.

Derartige Handhabungsvorrichtungen mit horizontal beweglichen Tragböden werden im Allgemeinen als Greiferköpfe bzw. als sog. Plattengreiferköpfe bezeichnet, im Gegensatz zu sog. Jalousiegreiferköpfen, bei denen der bewegliche Boden aus einer Vielzahl von zu Jalousien zusammengefassten Stäben gebildet ist. Wie bereits oben erwähnt, lässt sich die erfindungsgemäße Schwingungsanregung auch mit ansonsten herkömmlich aufgebauten Jalousiegreiferköpfen kombinieren, so dass die vorliegende Erfindung auch eine Vorrichtung mit einem verschiebbaren Tragboden und einer diesem zugeordneter Vibrationseinrichtung umfasst, wobei der Tragboden durch eine Jalousie gebildet ist, vorzugsweise mit einer in Schwingungen versetzbaren Vorderkante zur Aufnahme der Artikel- und/oder Gebindelagen.

Zur Anpassung an verschiedene Artikel oder Gebindegrößen und/oder -gewichte ist erfindungsgemäß vorgesehen, dass eine Amplitude der Schwingbewegung des Tragbodens wegabhängig bzw. in Abhängigkeit von einer Vorschubposition des Tragbodens variabel ist, so dass bei leichteren Artikeln eine geringere Schwingamplitude ggf. mit einer höheren Schwingfrequenz kombiniert werden kann, während bei schwereren und größeren Artikeln die Schwingamplitude erhöht und gleichzeitig die Vibrationsfrequenz reduziert wird.

Wenn also im vorliegenden Zusammenhang von einer mittelfrequenten Schwingung oder von einer höher- oder niederfrequenten Schwingung die Rede ist, so richten sich diese Angaben auf den mit der Schwingungstechnik vertrauten Fachmann, der vor die Aufgabe gestellt wird, mittels vibrierender Tragbodenhälften aus Metall oder einem anderen geeigneten Material die gewünschte Schwingungsanregung der damit zu hebenden Artikel- oder Gebindelagen zu erreichen. Die sinnvoll einzustellenden Frequenzbereiche sind stark vom Gewicht der Ladung und insbesondere der einzelnen Artikel bzw. Gebinde abhängig, da schwerere Gebinde bereits bei einer Schwingungsfrequenz von bspw. ca. 30 bis 50 Hertz angehoben werden können, während leichtere Artikel bei einer solchen Frequenz, ggf. gepaart mit einer relativ großen Auslenkung, unter Umständen zum Springen neigen könnten, so dass hierfür eine höhere Frequenz und eine geringere Schwingungsamplitude sinnvoll sein wird.

Bei einer weiteren Ausführungsvariante der erfindungsgemäßen Vorrichtung weisen zumindest die Vorderkante des Tragbodens bzw. die Vorderkanten und/oder vorderen Bereiche der gegensinnig bewegbaren Tragbodenhälften eine Oberfläche mit gegenüber der übrigen Auflagefläche reduziertem Haftreibungskoeffizienten auf, so dass die Artikel oder Gebinde auf diesen Bereichen während der Verschiebebewegungen der Tragbodenhälften leichter gleiten können. Eine solche Oberfläche kann bspw. mittels einer geeigneten Kunststoffbeschichtung aus z.B. PTFE oder einem anderen geeigneten Material zur Verfügung gestellt werden. Denkbar sind auch nachträgliche Behandlungen der metallischen Oberfläche der Tragbodenhälften, bspw. Schleifen und Polieren, um damit eine besonders glatte und damit rutschfördernde Oberflächenbeschaffenheit zu erreichen.

Zusätzlich kann es von Vorteil sein, wenn zumindest die Vorderkante des Tragbodens bzw. die Vorderkanten und/oder vorderen Bereiche der gegensinnig bewegbaren Tragbodenhälften eine geneigte Oberfläche und/oder einen keilförmig geformten Querschnitt aufweisen. Die Neigung sollte dabei so gerichtet sein, dass die Artikel bzw. Gebinde beim Schließen der Tragbodenhälften, d.h. bei deren Bewegung aufeinander zu, leicht angehoben werden.

Als alternative Ausgestaltung kann weiterhin vorgesehen sein, dass zumindest die Vorderkante des Tragbodens bzw. die Vorderkanten der gegensinnig bewegbaren

Tragbodenhälften einen Bereich und/oder eine Leiste mit gegenüber der übrigen Auflagefläche erhöhtem Haftreibungskoeffizienten aufweist. Ein solcher vorderer Bereich mit erhöhter Haftung kann das Anheben der Artikel zum Unterfahren mit den Tragbodenhälften erleichtern, bis die Bereiche der Tragböden mit reduziertem Haftreibungskoeffizienten für das erleichterte Gleiten der Tragböden unterhalb der Artikel bzw. Gebinde sorgen können. Dieser besagte Bereich kann bspw. durch einen gummierten Streifen o. dgl. gebildet sein.

Das oben genannte Ziel der Erfindung wird darüber hinaus mit einem Verfahren mit den Merkmalen des unabhängigen Verfahrensanspruchs erreicht.

Wie bereits erwähnt, lässt sich die erfindungsgemäße Schwingungsanregung auch mit ansonsten herkömmlich aufgebauten Jalousiegreiferköpfen kombinieren, so dass bei der vorliegenden Erfindung der Tragboden wahlweise durch eine Jalousie gebildet sein kann, vorzugsweise mit einer in Schwingungen versetzbaren Vorderkante zur Aufnahme der Artikel- und/oder Gebindelagen.

Beim Verfahren ist erfindungsgemäß vorgesehen, dass eine Amplitude der Schwingbewegung des Tragbodens wegabhängig bzw. in Abhängigkeit von einer Vorschubposition des Tragbodens variabel ist. Auf diese Weise kann die Vibrationsbewegung in optimaler Weise auf unterschiedliche Artikel- oder Gebindegrößen und/oder -gewichte angepasst werden, da bspw. leichtere und kleinere Gebinde eine geringere Schwingungsamplitude und dafür eine höhere Schwingfrequenz benötigen, während es bei größeren Artikeln von Vorteil sein kann, die Schwingungsamplitude zu erhöhen und damit die Frequenz der Vibrationen in geeigneter Weise zu reduzieren. In diesem Zusammenhang kann es besonders vorteilhaft sein, die Schwingungsfrequenz des Tragbodens bzw. der Tragbodenhälften auf eine Resonanzfrequenz der Artikel bzw. Gebinde abzustimmen, sofern dies sinnvoll und möglich ist.

Die Vibrationen können auf unterschiedliche technische Weise erzeugt und in die Tragböden eingeleitet werden, bspw. mittels dort angeordneter Drehantriebe, bei denen eine mit Unwucht ausgestattete Welle in eine Rotation variabler Drehzahl versetzt wird. Wahlweise können die Vibrationen jedoch auch auf andere Weise erzeugt werden, bspw. mit hydraulischen, pneumatischen oder elektromotorischen Dreh- und/oder Linearantrieben, d.h. wahlweise mit rotierenden oder oszillierenden Antrieben, die auf den Tragböden angeordnet oder mit diesen wirkverbunden bzw. mechanisch gekoppelt sein können. Denkbar sind darüber hinaus auch elektromagnetische Aktoren oder bei sehr geringen Amplituden auch Piezoaktoren, die äußerst kompakt ausgebildet sein und mit sehr geringen Antriebsleistungen auskommen können.

Vorzugsweise werden der Tragboden bzw. die beiden Tragbodenhälften mit ihren abgeschrägten Vorderkanten in Kanten an den Unterseiten der Gebinde- oder Artikellagen geschoben, wodurch die Lagen ggf. leichter aufgenommen werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einer schematischen Seitenansicht zwei aufeinander stehende Gebindelagen mit Getränkebehältern, über die eine erfindungsgemäße Handhabungsvorrichtung platziert ist, deren Tragbodenhälften geöffnet sind.
Fig. 2 zeigt die Anordnung gemäß Fig. 1, wobei die Tragbodenhälften der Handhabungsvorrichtung aufeinander zu und in Richtung einer Trennebene zwischen den aufeinander stehenden Gebindelagen bewegt sind.
Fig. 3 zeigt die Anordnung gemäß Fig. 1 und Fig. 2, wobei die außen stehenden Gebinde bereits angehoben sind.
Fig. 4 zeigt die Anordnung gemäß Fig. 3, bei der die nächsten Gebinde bereits erfasst und leicht angehoben werden.
Fig. 5 zeigt in einer weiteren Ansicht die Anordnung gemäß Figuren 1 bis 4, bei der die nächsten Gebinde bereits voll erfasst sind und auf den Tragbodenhälften stehen.
Fig. 6 in einer weiteren schematischen Seitenansicht die vollständig von den geschlossenen und sich mittig annähernd berührenden Tragbodenhälften erfasste und darauf befindliche obere Gebindelage mit Getränkebehältern, die zur Übernahme mittels des angehobenen Greiferkopfes bereit sind.

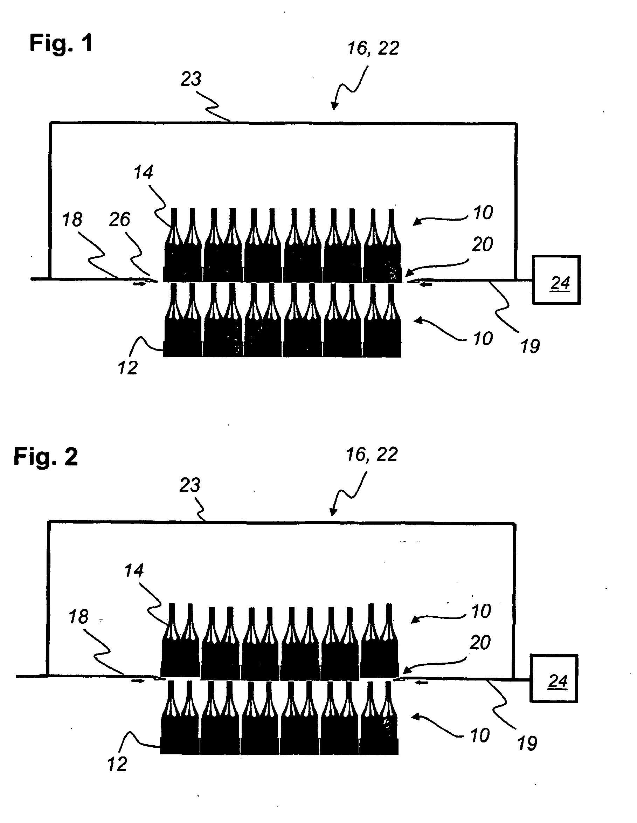

Die folgende detaillierte Beschreibung einer bevorzugten Ausführungsform der Erfindung dient als nicht einschränkendes Beispiel. Gleiche Bauteile in den Figuren 1 bis 6 weisen dabei grundsätzlich gleiche Bezugszeichen auf und werden teilweise nicht mehrfach erläutert.

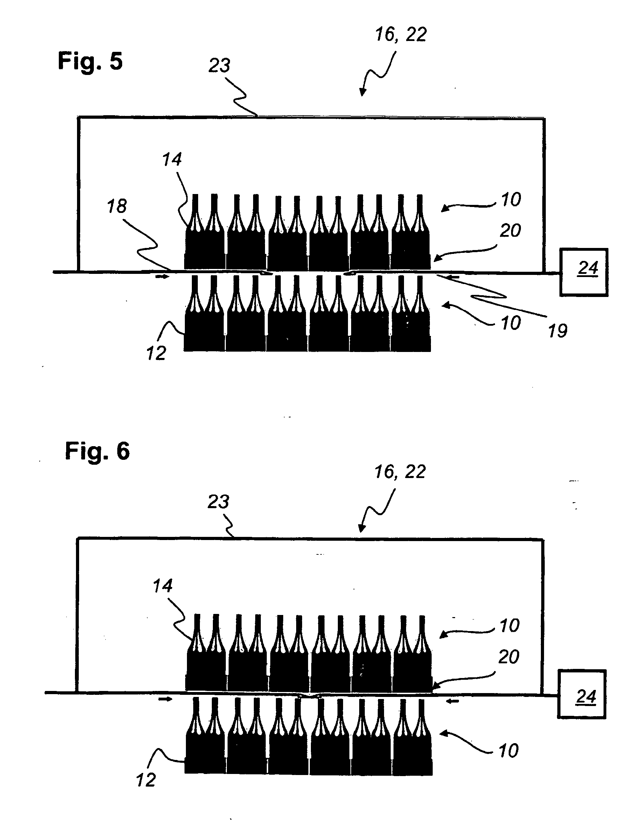

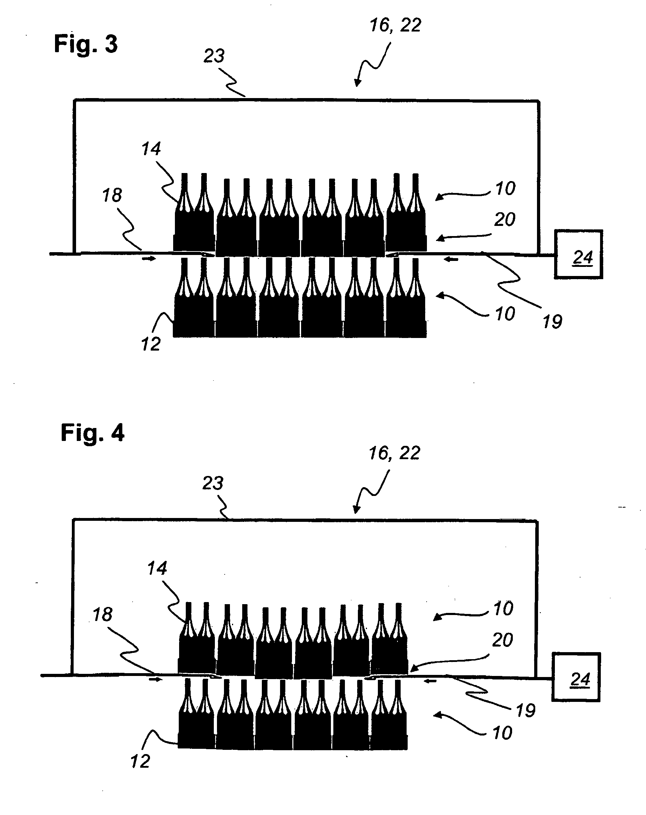

Die schematischen Seitenansichten der Figuren 1 bis 6 zeigen die aufeinander folgenden Situationen beim Erfassen einer kompletten Lage 10 von Gebinden 12 mit Getränkebehältern 14, über die eine erfindungsgemäße Handhabungsvorrichtung 16 platziert ist, deren Tragbodenhälften 18 und 19 zunächst geöffnet sind (vgl. Fig. 1), danach allmählich aufeinander zu bewegt und damit geschlossen werden, indem die Tragbodenhälften 18, 19 der Handhabungsvorrichtung 16 in Richtung einer Trennebene 20 zwischen den aufeinander stehenden Gebindelagen 10 bewegt werden (vgl. Fig. 2), wodurch zunächst gemäß Fig. 3 die außen stehenden Gebinde 12 leicht angehoben werden, wonach anschließend gemäß Fig. 4 die nächsten Gebinde 12 bereits erfasst und leicht angehoben werden. Die Fig. 5 zeigt eine weitere Ansicht, bei der die nächsten Gebinde 12 bereits voll erfasst sind und auf den sich weiter schließenden Tragbodenhälften 18 und 19 stehen. Die Fig. 6 zeigt schließlich die vollständig von den geschlossenen und sich mittig annähernd berührenden Tragbodenhälften 18, 19 erfasste und darauf befindliche obere Gebindelage 10 mit Getränkebehältern 14, die zur Übernahme mittels des angehobenen Greiferkopfes 22 bereit sind. Der dargestellte Greiferkopf 22 kann aufgrund seiner starren und horizontal verschiebbaren Tragböden 18 und 19 auch als Plattengreiferkopf bezeichnet werden. Der Greiferkopf 22 umfasst einen Aufnahmebereich 23, der einen Rahmen bildet, in dem die Tragbodenhälften 18 und 19 verschiebbar geführt sind, und der selbst an einem schwenkbaren Arm o. dgl. aufgehängt ist, so dass der gesamte Greiferkopf 22 gesteuerte Schwenkbewegungen ausführen kann. Der Greiferkopf 22 und der Aufnahmebereich 23 können bspw. mit einem Roboterarm (nicht dargestellt) geführt werden.

Der Handhabungsvorrichtung 16, die durch den dargestellten Plattengreiferkopf 22 gebildet ist, ist gemäß vorliegender Erfindung eine Vibrationseinrichtung 24 zugeordnet, die dafür sorgt, dass die Artikel bzw. Gebinde 12 während ihres Aufnehmens und/oder Ablegens in Vibrationen versetzt werden, was eine Gleitbewegung sowie ein Rutschen über dem Tragboden 18, 19 der Handhabungsvorrichtung 16 unterstützt. Wie in den Figuren 1 bis 6 jeweils anhand der der rechten Tragbodenhälfte 19 zugeordneten Vibrationseinrichtung 24 angedeutet, ist jedem der beiden verschiebbaren Tragbodenhälften 18 und 19 eine eigene Vibrationseinrichtung 24 zugeordnet, die steuerbar ist. Die der linken Tragbodenhälfte 18 zugeordnete Vibrationseinrichtung ist zeichnerisch nicht dargestellt, jedoch vorhanden. Durch den in gezielte Vibration versetzten Tragboden 18, 19 können die aufzunehmenden Lagen 10 besonders schonend angehoben und unterfahren werden, ohne dass eine seitliche Andrückbewegung oder ein seitliches Anheben erforderlich wäre. Die gegensinnig in horizontaler Ebene verschiebbaren Tragbodenhälften 18, 19 werden zumindest während ihrer Schließbewegung, ggf. zusätzlich auch während ihrer Öffnungsbewegung in niedrig-, mittel- oder höherfrequente Vibrationen versetzt, um das Aufnehmen und das Rutschen der aufzunehmenden oder abzulegenden Lagen 10 von Artikeln oder Gebinden 12 gezielt zu unterstützen. Dadurch wird gewährleistet, dass zumindest die Vorderkanten der Tragbodenhälften 18, 19 eine kreisende und/oder oszillierende Schwingbewegung ausführen.

Wie in den Figuren 1 bis 6 weiterhin erkennbar, weisen die Vorderkanten 26 der gegensinnig bewegbaren Tragbodenhälften 18, 19 eine leicht keilförmige Kontur mit einer in Richtung zur Kante nach unten abfallenden Schräge auf, die das Aufnehmen der Lagen 10 und deren Unterschneiden mit den Tragbodenhälften 18 und 19 erleichtert.

Die Vibrationen können auf unterschiedliche technische Weise erzeugt und in die Tragböden 18, 19 eingeleitet werden, bspw. mittels dort angeordneter Drehantriebe, die Unwuchten aufweisen.

Die Erfindung ist nicht auf die vorstehenden Ausführungsbeispiele beschränkt.

### Bezugszeichenliste:

- 10: Lage, Gebindelage
- 12: Gebinde
- 14: Getränkebehälter
- 16: Handhabungsvorrichtung
- 18: linke Tragbodenhälfte
- 19: rechte Tragbodenhälfte
- 20: Trennebene
- 22: Greiferkopf, Plattengreiferkopf
- 24: Vibrationseinrichtung
- 26: Vorderkante

## Patentansprüche

1. Vorrichtung (16) zur Handhabung von Artikel- und/oder Gebindelagen (10), umfassend einen beweglichen Aufnahmebereich (23) mit einem seitlich verschiebbaren Tragboden zur Aufnahme der Artikellagen (10) bzw. Gebinde (12), mit wenigstens einer dem verschiebbaren Tragboden zugeordneten steuerbaren Vibrationseinrichtung (24), **dadurch gekennzeichnet, dass** eine Amplitude der Schwingbewegung des Tragbodens wegabhängig bzw. in Abhängigkeit von einer Vorschubposition des Tragbodens variabel ist.

2. Vorrichtung nach Anspruch 1, mit einem mindestens zweiteilig ausgebildeten Tragboden mit zwei gegensinnig zueinander beweglichen Tragbodenhälften (18, 19), die innerhalb einer gemeinsamen Ebene verschiebbar sind.

3. Vorrichtung nach Anspruch 2, bei der jeder der wenigstens zwei Tragbodenhälften (18, 19) eine Vibrationseinrichtung (24) zugeordnet ist.

4. Vorrichtung nach einem der Ansprüche 1 bis 3, bei der zumindest die Vorderkante (26) des Tragbodens bzw. die Vorderkanten (26) und/oder vorderen Bereiche der gegensinnig bewegbaren Tragbodenhälften (18, 19) eine Oberfläche mit gegenüber der übrigen Auflagefläche reduziertem Haftreibungskoeffizienten aufweist.

5. Vorrichtung nach einem der Ansprüche 1 bis 4, bei der zumindest die Vorderkante (26) des Tragbodens bzw. die Vorderkanten (26) und/oder vorderen Bereiche der gegensinnig bewegbaren Tragbodenhälften (18, 19) eine geneigte Oberfläche und/oder einen keilförmig geformten Querschnitt aufweisen.

6. Vorrichtung nach einem der Ansprüche 1 bis 3 oder 5, bei der zumindest die Vorderkante (26) des Tragbodens bzw. die Vorderkanten (26) der gegensinnig bewegbaren Tragbodenhälften (18, 19) einen Bereich und/oder eine Leiste mit gegenüber der übrigen Auflagefläche erhöhtem Haftreibungskoeffizienten aufweist.

7. Verfahren zur Handhabung von Artikel- und/oder Gebindelagen (10), bei dem diese mittels einer beweglichen Vorrichtung (16) mit einem seitlich verschiebbaren Tragboden von einer Aufnahmeposition aufnehmbar bzw. in eine Ablageposition ablegbar sind, wobei der verschiebbare Tragboden zumindest während der Aufnahme und/oder der Ablage der Artikel- bzw. Gebindelagen (10) in Vibration versetzt wird, **dadurch gekennzeichnet, dass** eine Amplitude der Schwingbewegung des Tragbodens wegabhängig bzw. in Abhängigkeit von einer Vorschubposition des Tragbodens variabel ist.

8. Verfahren nach Anspruch 7, bei dem der Tragboden aus mindestens zwei gegensinnig zueinander beweglichen Tragbodenhälften (18, 19) gebildet ist, die innerhalb einer gemeinsamen Ebene unter gleichzeitiger Vibrationsbewegung verschoben werden.

9. Verfahren nach Anspruch 7 oder 8, bei dem zumindest die Vorderkanten (26) der Tragbodenhälften (18, 19) während ihrer Verschiebebewegung eine kreisende und/oder oszillierende Schwingbewegung ausführen.

10. Verfahren nach einem der Ansprüche 7 bis 9, bei dem der Tragboden bzw. die beiden Tragbodenhälften (18, 19) mit ihren abgeschrägten Vorderkanten (26) in Kanten an den Unterseiten der Gebinde- oder Artikellagen (10) geschoben werden.

11. Verfahren nach einem der Ansprüche 7 bis 10, bei dem die Schwingungsfrequenz des Tragbodens bzw. der Tragbodenhälften (18, 19) auf eine Resonanzfrequenz der Artikel bzw. Gebinde abgestimmt wird.

## Claims

1. Device (16) for handling article layers and/or bundle layers (10), said device comprising a movable receiving section (23) with a laterally shiftable support base for receiving the article layers (10) or, as the case may be, the bundles (12) and with at least one controllable vibration apparatus (24) associated with the shiftable support base, **characterised in that** an amplitude of the swinging motion of the support base is path-dependent or, as the case may be, variable depending on a feed position of the support base.

2. Device according to claim 1, having an at least two-part support base with the two support base halves (18, 19) being movable in opposite directions and toward each other and shiftable within the same plane.

3. Device according to claim 2 wherein a vibration apparatus (24) is associated with each of the at least two support base halves (18, 19).

4. Device according to one of the claims 1 to 3 wherein the surface of at least the leading edge (26) of the support base or, as the case may be, of the leading edges (26) and/or the front sections of the oppositely movable support base halves (18, 19) have a lower static friction coefficient than the remaining sections of the support surface.

5. Device according to one of the claims 1 to 4 wherein at least the leading edge (26) of the support base or, as the case may be, of the leading edges (26) and/or the front sections of the oppositely movable support base halves (18, 19) have a surface that is inclined and/or that has a wedge-shaped profile.

6. Device according to one of the claims 1 to 3 or 5 wherein a section and/or a strip of at least the leading edge (26) of the support base or, as the case may be, of the leading edges (26) of the oppositely movable support base halves (18, 19) have a lower static friction coefficient than the remaining sections of the support surface.

7. Method for handling article layers and/or bundle layers (10) wherein the said article or bundle layers can be received from a receiving position or, as the case may be, deposited in a depositing position by means of a movable device (16) with a laterally shiftable support base, wherein the shiftable support base is set into a swinging motion at least while the article layers or, as the case may be, the bundle layers (10) are being received and/or deposited, said method **characterised in that** an amplitude of the swinging movement of the support base is path-dependent or, as the case may be, variable depending on a feed position of the support base.

8. Method according to claim 7 wherein the support base is formed by at least two support base halves (18, 19), which are movable against each other and shiftable within the same plane under a simultaneous vibration motion.

9. Method according to claim 7 or 8 wherein at least the leading edges (26) of the support base halves (18, 19) perform a circling and/or oscillating swinging motion during the shifting movement.

10. Method according to one of the claims 7 to 9 wherein the beveled leading edges (26) of the support base or of the two support base halves (18, 19) are pushed into edges at the bottom sides of the bundle or article layers (10).

11. Method according to one of the claims 7 to 10 wherein the oscillation frequency of the support base or of the support base halves (18, 19) is adjusted to a resonance frequency of the articles or bundles, as the case may be.

## Revendications

1. Dispositif (16) de manipulation de couches d'articles et/ou de packs (10), comprenant une zone de réception (23) mobile ayant un fond de support latéralement déplaçable qui est destiné à recevoir les couches d'articles (10) ou bien les packs (12), avec au moins un dispositif de vibration (24) apte à être commandé qui est associé audit fond de support déplaçable, **caractérisé par le fait qu'**une amplitude du mouvement vibratoire du fond de support est variable en fonction du chemin ou bien en fonction d'une position d'avance dudit fond de support.

2. Dispositif selon la revendication 1, comprenant un fond de support qui est réalisé au moins en deux parties et qui présente deux moitiés de fond de support (18, 19) lesquelles sont mobiles en sens inverse l'une par rapport à l'autre et aptes à être déplacées à l'intérieur d'un plan commun.

3. Dispositif selon la revendication 2, dans lequel un dispositif de vibration (24) est associé à chacune desdites au moins deux moitiés de fond de support (18, 19).

4. Dispositif selon l'une quelconque des revendications 1 à 3, dans lequel au moins l'arête avant (26) du fond de support ou bien les arêtes avant (26) et/ou les zones avant des moitiés de fond de support (18, 19) mobiles en sens inverse présentent une surface ayant un coefficient d'adhérence réduit par rapport au reste de la surface d'appui.

5. Dispositif selon l'une quelconque des revendications 1 à 4, dans lequel au moins l'arête avant (26) du fond de support ou bien les arêtes avant (26) et/ou les zones avant des moitiés de fond de support (18,19) mobiles en sens inverse présentent une surface inclinée et/ou une section transversale formée en coin.

6. Dispositif selon l'une quelconque des revendications 1 à 3 ou 5, dans lequel au moins l'arête avant (26) du fond de support ou bien les arêtes avant (26) des moitiés de fond de support (18,19) mobiles en sens inverse présentent une zone et/ou une baguette ayant un coefficient d'adhérence augmenté par rapport au reste de la surface d'appui.

7. Procédé de manipulation de couches d'articles et/ou de packs (10), dans lequel celles-ci peuvent être reçues depuis une position de réception ou bien être déposées dans une position de dépôt par l'intermédiaire d'un dispositif (16) mobile ayant un fond de support latéralement déplaçable, ledit fond de support déplaçable étant mis en vibration au moins pendant que les couches d'articles ou bien de packs (10) sont reçues et/ou déposées, **caractérisé par le fait qu'**une amplitude du mouvement vibratoire du fond de support est variable en fonction du chemin ou bien en fonction d'une position d'avance dudit fond de support.

8. Procédé selon la revendication 7, dans lequel ledit fond de support est constitué par au moins deux moitiés de fond de support (18, 19) qui sont mobiles en sens inverse l'une par rapport à l'autre et qui, tout en ayant un mouvement de vibration, sont déplacées à l'intérieur d'un plan commun.

9. Procédé selon la revendication 7 ou 8, dans lequel au moins les arêtes avant (26) des moitiés de fond de support (18, 19) exercent un mouvement vibratoire circulaire et/ou oscillant durant leur mouvement de déplacement.

10. Procédé selon l'une quelconque des revendications 7 à 9, dans lequel ledit fond de support ou bien les deux moitiés de fond de support (18, 19) sont poussé(e)s par leurs arêtes avant (26) biseautées dans des arêtes sur les faces inférieures des couches de packs ou d'articles (10).

11. Procédé selon l'une quelconque des revendications 7 à 10, dans lequel la fréquence de vibration du fond de support ou bien des moitiés de fond de support (18, 19) est accordée avec une fréquence de résonance des articles ou bien packs.
